# EUROPEAN PATENT SPECIFICATION

(11) **EP 2 774 791 B1**
(45) Date of publication and mention of the grant of the patent: **22.08.2018**
(21) Application number: 14158454.0
(22) Date of filing: 07.03.2014
(51) Int. Cl.: B60H 1/00

(54) **Bracket connection device, particularly for fastening components in an engine compartment**
Halterungsvorrichtung , insbesondere zur Befestigung von Bauteilen im Motorraum
Dispositif de connexion de support, en particulier pour la fixation de composants dans le compartiment moteur

(30) Priority: 08.03.2013 IT TO20130185
(43) Date of publication of application: 10.09.2014
(73) Proprietor: Fiat Group Automobiles S.p.A., 10135 Torino (TO) (IT)
(72) Inventor: MANCUSO, Alessandro, 10135 Torino (IT); TARZIA Antonio, 10135 Torino (IT)
(74) Representative: Lovino, Paolo

(56) References cited:
- FR-A1- 2 663 354
- KR-A- 20100 006 973
- US-A- 4 452 418
- US-A1- 2002 157 885
- US-A1- 2005 067 548
- US-B1- 7 506 619

## Description

The present invention relates to an engine compartment with a bracket connection device for fastening a component to the body, according to the preamble of claim 1, which corresponds to the solution shown in US2002157885A1.

For fastening pipes and other components to the body in the engine compartment of the motor vehicles, are generally provided bands or, when the elements to be fastened are spaced apart, metal brackets.

Such brackets are designed and manufactured with specific geometry for each type of coupling to be obtained, depending on the available space, the predicted distance between the elements to be coupled and the orientation of such elements in the engine compartment.

In other words, the brackets of the known type cannot be used for different couplings and/or for different distances, even if the difference is of a few millimeters, but a bracket for each specific coupling is provided. Due to this specific application, the number of the brackets for the couplings is relatively high. The lack of standardization involves a high cost and, moreover, requires storing and sorting systems relatively complex, with different identification codes, for the various brackets.

Purpose of the present invention is to provide a bracket connection device for fastening a component to the body in an engine compartment, which allows to solve in a simple and economic way the above-mentioned drawback, i.e. it can give a certain freedom or modularity degree for connecting elements that are arranged at different distances from each other and that is relatively simple to manufacture and to handle.

According to the present invention, an engine compartment is provided as defined in claim 1.

For a better understanding of the present invention is now described a preferred embodiment, purely by way of nonlimiting example, with reference to the accompanying drawings, wherein:
- Figure 1 is a perspective that shows a preferred embodiment of the bracket connection device for fastening a component to the body in an engine compartment according to the present invention;
- Figure 2 shows a variant of the device of Figure 1; and
- Figures 3 and 4 show examples of application of the device of Figure 1.

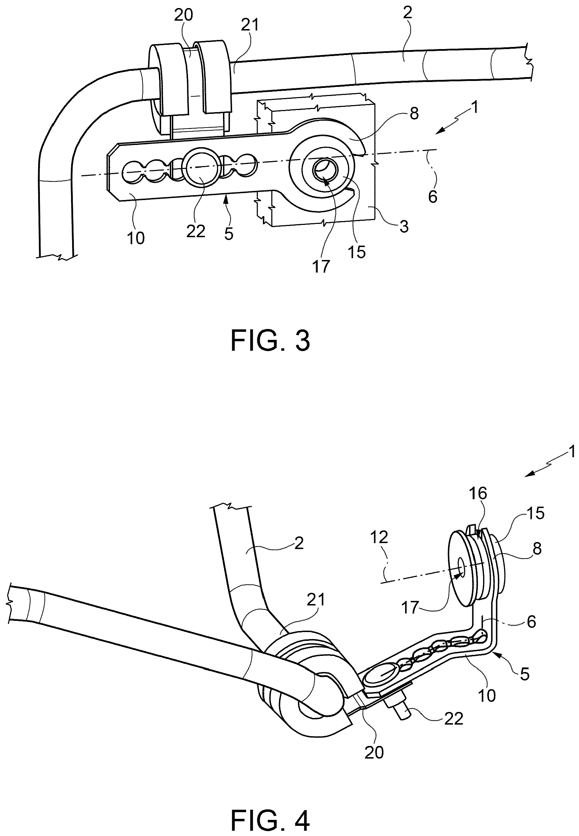

In the attached figures, the reference number 1 indicates a bracket connection device, used for fastening a component to a body portion 3 (Figure 3) in an engine compartment of a motor vehicle. By way of example, the component 2 is defined by a pipe, in particular forming part of an air conditioning system.

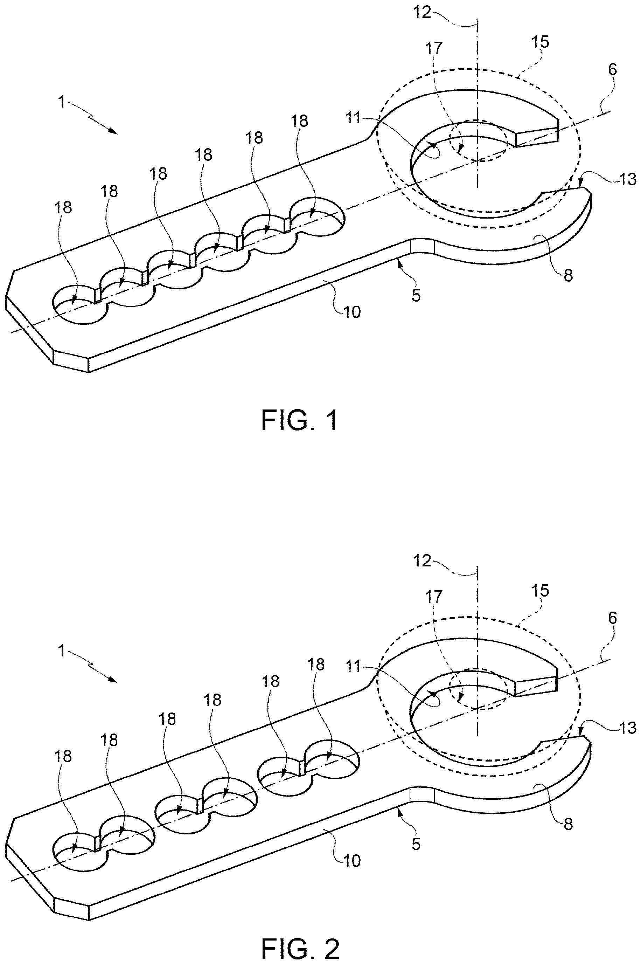

With reference to Figure 1, the device 1 comprises a bracket 5, which is defined by a plate element, preferably of constant thickness, and is elongated along a direction 6, which is preferably straight (fig. 1).

The bracket 5 is constituted by an eyelet portion 8, arranged at one end; and by an arm 10, which extends so as to protrude from the portion 8 along the direction 6 and is made as a single piece with the portion 8.

With reference to Figure 1, the portion 8 has a through seat 11, which extends along an axis 12 perpendicular to the direction 6; and a notch 13, which starts from the seat 11, radially extends and ends at the outer edge of the portion 8. Therefore, the inner edge of the portion 8, i.e. the contour of the seat 11, is not closed and continuous but is open at the notch 13.

According to a variant not shown, the notch 13 is absent, therefore the portion 8 is annular, i.e. the contour of the seat 11 is continuous, preferably circular.

The device 1 also comprises a collar 15, which comprises an elastically deformable material, for example rubber or other elastomeric material, is supported by the portion 8 in a fixed position, engages the seat 11 and is coaxial with the seat 11. Preferably, the collar 15 protrudes along the axis 12 from both sides with respect to the portion 8. In particular, during assembly, the collar 15 is inserted into the seat 11 by crushing and passing it radially through the notch 13. When it exits from the notch 13 into the seat 11, the collar 15 takes back its original shape (complementary to that of the seat 11). In particular, the collar 15 has an annular groove 16 (Fig. 4), which is made along the lateral surface and is engaged by the inner edge of the portion 8.

According to a variant not shown, the collar 15 is over-molded onto the inner edge of the portion 8.

As shown in the attached figures, the collar 15 defines an axial passage 17, engaged by a connection element (not shown), e.g. a screw or stud, fastening the device 1 to the body portion 3. The collar 15, thanks to properties of the material in which it is made, dampens the transmission of vibration between the body portion 3 and the component 2.

With reference to Figure 1, the arm 10 has a plurality of through holes 18, whose axes are spaced apart along the direction 6 and are orthogonal to the arm 10. Said axes, preferably, are aligned along the direction 6. Advantageously, the holes 18 are at least three and are circular.

Advantageously, the holes 18 all have the same diameter; and/or the pitch (or distance) between the axes of the holes 18 is constant.

In particular, at least part of the holes 18 communicate with one another, i.e. the distance between the axes of two consecutive holes 18 is less than the sum of the two radii. This feature allows to bring the holes 18 closer to each other, i.e. to reduce the pitch, but without substantially altering the circular shape of the edge of the holes 18 themselves.

In the example of Figure 1, the holes 18 communicate with one another so as to form, together, a single slit 19. In the example of Figure 2, however, the holes 18 communicate with one another in pairs, and each pair is spaced apart from the next one, to avoid excessively reducing the stiffness and/or weakening too much the arm 10 of the bracket 5.

As shown in figure 3, the device 1 also comprises a support element 20, which supports a portion 21 of the component 2, is defined for example by a band wrapped around the portion 21 and is fixed to any one of the holes 18 by way of a connection element 22 which extends axially through said hole.

The connection element 22 can be defined by a deformable element, defining a snap coupling; by a pressure element, forming an interference coupling; or by a screw element, defining a threaded coupling. It is not excluded, however, that other types of coupling may be envisaged to exploit the possibility given by the holes 18 to adjust in a discrete way the position of the support element 20 with respect to the axis 12.

The choice of which hole 18 to use for fastening the support element 20 is made in the design step or directly in the assembly step, as a function of the available spaces and as a function of the distance between the component 2 and the body portion 3. Therefore, the row of holes 18 gives the operator a degree of freedom for fastening the component to the second body portion 3. In other words, it is possible to use the device 1 in a wide range of situations, wherein the elements to be coupled are placed at different distances.

Advantageously, the bracket 5 is flat. However, as shown in Figure 4, the bracket 5 is made of a material and with a thickness such as to allow a user to bend and therefore deform it plastically, under construction, or during the installation and fastening of the components, in order to obtain a different shape than the flat one and, therefore, improve the adaptability of the device 1 to the available spaces.

From the foregoing it is evident how the device 1 is substantially "modular", i.e. it can be used in different areas of the engine compartment and/or for fastening various components, as it has the possibility of joining elements arranged at different distances from one another, corresponding to the distance between the axis 12 and the axis of the various holes 18 that can be chosen for the fastening.

Moreover, the bracket 5 has a relatively simple shape to handle and use. In particular, during the connection between the connection element 22 and the selected hole 18, the operator can rotate the bracket 5 about axis 12 to search for the optimum angle with respect to the body portion 3.

From the above it is, finally, evident that the described and illustrated device 1 may be subject to modifications and variants which do not depart from the scope of protection of the present invention, as defined in the appended claims.

In particular, the distribution of the holes 18 along the arm 10 may be different from that shown by way of example; and/or the direction 6 may be curved; and/or the connection element 22 could be attached directly to the component 2, without support element 20.

## Claims

1. An engine compartment comprising:
- a body portion (3);
- a component (2);
- a bracket connection device (1) for fastening said component (2) to said body portion (3);
- a connection element, fastening said bracket connection device (1) to said body portion (3);
the bracket connection device (1) comprising:
- a bracket (5) defined by a plate element, elongated along a longitudinal direction (6), and comprising:
a) an end portion (8) having a through seat (11);
b) an arm (10), which extends so as to protrude from said end portion (8);
- a collar (15) engaging said seat (11), comprising elastically deformable material and defining an axial passage (17);
said arm (10) having a plurality of holes (18) made along respective axes which are spaced apart from each other and aligned along said longitudinal direction (6); said holes (18) having the same diameter;
**characterized in that**:
- said axial passage (17) is engaged by said connection element;
- said component (2) is fastened to any one of said holes (18) .

2. The engine compartment according to claim 1, **characterized in that** said bracket (5) is made as a single piece.

3. The device according to claim 1, **characterized in that** said elastically deformable material is rubber or other elastomeric material.

4. The engine compartment according to claim 1, **characterized in that** said at least some of the holes (18) communicate with one another.

5. The engine compartment according to claim 4, **characterized in that** said holes (18) form pairs of holes, where each pair is spaced apart from the adjacent pair, and the holes of each pair communicate with one another.

6. The engine compartment according to claim 4, **characterized in that** said holes (18) form, all together, a longitudinal slit (19).

7. The engine compartment according to any one of the previous claims, **characterized in that** said at least some of the holes (18) have respective axes arranged at a constant pitch.

8. The engine compartment according to any one of the preceding claims, **characterized in that** said end portion (13) has a notch (13) which radially extends from one edge of said seat (11) to an outer edge of said end portion (8).

9. The engine compartment according to any one of the preceding claims, **characterized in that** the arm (10) is made of a plastically deformable material.

## Patentansprüche

1. Motorraum umfassend:
- einen Karosserieabschnitt (3);
- ein Bauteil (2);
- eine Klammerverbindungsvorrichtung (1) zum Befestigen des Bauteils (2) an dem Karosserieabschnitt (3);
- ein Verbindungselement, das die Klammerverbindungsvorrichtung (1) an dem Karosserieabschnitt (3) befestigt;
wobei die Klammerverbindungsvorrichtung (1) Folgendes umfasst:
- eine Klammer (5), die durch ein Plattenelement definiert ist, die entlang einer Längsrichtung (6) langgestreckt ist, und die Folgendes umfasst:
a) einen Endabschnitt (8), der einen Durchgangssitz (11) aufweist;
b) einen Arm (10), welcher sich derart erstreckt, dass er von dem Endabschnitt (8) vorsteht;
- einen Kragen (15), der in den Sitz (11) eingreift, der ein elastisch verformbares Material umfasst und einen axialen Durchgang (17) definiert;
wobei der Arm (10) mehrere Löcher (18) aufweist, die entlang jeweiliger Achsen eingebracht sind, welche voneinander beabstandet sind und entlang der Längsrichtung (6) fluchten; wobei die Löcher (18) denselben Durchmesser aufweisen;
**dadurch gekennzeichnet, dass**:
- das Verbindungselement in den axialen Durchgang (17) eingreift;
- das Bauteil (2) an einem der Löcher (18) befestigt ist.

2. Motorraum nach Anspruch 1, **dadurch gekennzeichnet, dass** die Klammer (5) als ein einziges Stück hergestellt ist.

3. Vorrichtung nach Anspruch 1, **dadurch gekennzeichnet, dass** das elastisch verformbare Material Gummi oder ein sonstiges elastomerisches Material ist.

4. Motorraum nach Anspruch 1, **dadurch gekennzeichnet, dass** die mindestens einigen der Löcher (18) miteinander verbunden sind.

5. Motorraum nach Anspruch 4, **dadurch gekennzeichnet, dass** die Löcher (18) Paare von Löchern bilden, wo jedes Paar von dem benachbarten Paar beabstandet ist, und die Löcher jedes Paars miteinander verbunden sind.

6. Motorraum nach Anspruch 4, **dadurch gekennzeichnet, dass** die Löcher (18) zusammen einen Längsschlitz (19) bilden.

7. Motorraum nach einem der vorherigen Ansprüche, **dadurch gekennzeichnet, dass** die mindestens einigen der Löcher (18) jeweilige Achsen aufweisen, die mit einer konstanten Neigung angeordnet sind.

8. Motorraum nach einem der vorherigen Ansprüche, **dadurch gekennzeichnet, dass** der Endabschnitt (13) eine Aussparung (13) aufweist, welche sich radial von einem Rand des Sitzes (11) zu einem äußeren Rand des Endabschnitts (8) erstreckt.

9. Motorraum nach einem der vorherigen Ansprüche, **dadurch gekennzeichnet, dass** der Arm (10) aus einem plastisch verformbaren Material hergestellt ist.

## Revendications

1. Compartiment de moteur comprenant :
une partie de corps (3) ;
un composant (2) ;
un dispositif de raccordement de support (1) pour fixer ledit composant (2) à ladite partie de corps (3) ;
un élément de raccordement fixant ledit dispositif de raccordement de support (1) à ladite partie de corps (3) ;
le dispositif de raccordement de support (1) comprenant :
un support (5) défini par un élément de plaque, allongé le long d'une direction longitudinale (6), et comprenant :
a) une partie d'extrémité (8) ayant un siège débouchant (11) ;
b) un bras (10) qui s'étend afin de faire saillie de ladite partie d'extrémité (8) ;
un collier (15) mettant en prise ledit siège (11), comprenant un matériau élastiquement déformable et définissant un passage axial (17) ;
ledit bras (10) ayant une pluralité de trous (18) réalisés le long d'axes respectifs qui sont espacés l'un de l'autre et alignés le long de ladite direction longitudinale (6) ; lesdits trous (18) ayant le même diamètre ;
**caractérisé en ce que** :
ledit passage axial (17) est mis en prise par ledit élément de raccordement ;
ledit composant (2) est fixé à l'un quelconque desdits trous (18).

2. Compartiment de moteur selon la revendication 1, **caractérisé en ce que** ledit support (5) est réalisé d'un seul tenant.

3. Dispositif selon la revendication 1, **caractérisé en ce que** ledit matériau élastiquement déformable est du caoutchouc ou un autre matériau élastomère.

4. Compartiment de moteur selon la revendication 1, **caractérisé en ce que** lesdits au moins certains des trous (18) communiquent entre eux.

5. Compartiment de moteur selon la revendication 4, **caractérisé en ce que** lesdits trous (18) forment des paires de trous, où chaque paire est espacée de la paire adjacente, et les trous de chaque paire communiquent entre eux.

6. Compartiment de moteur selon la revendication 4, **caractérisé en ce que** lesdits trous (18) forment, tous ensemble, une fente longitudinale (19).

7. Compartiment de moteur selon l'une quelconque des revendications précédentes, **caractérisé en ce que** lesdits au moins certains des trous (18) ont des axes respectifs agencés à un pas constant.

8. Compartiment de moteur selon l'une quelconque des revendications précédentes, **caractérisé en ce que** ladite partie d'extrémité (13) a une encoche (13) qui s'étend, radialement, à partir d'un bord dudit siège (11) jusqu'à un bord externe de ladite partie d'extrémité (8) .

9. Compartiment de moteur selon l'une quelconque des revendications précédentes, **caractérisé en ce que** le bras (10) est réalisé avec un matériau plastiquement déformable.
